# EUROPEAN PATENT APPLICATION

(11) **EP 2 108 942 A1**
(43) Date of publication of application: **14.10.2009**
(21) Application number: 08103460.5
(22) Date of filing: 09.04.2008
(51) Int. Cl.: G01N 21/64

(54) **Reference light source device**

(71) Applicant: F. Hoffmann-La Roche AG, 4070 Basel (CH); Roche Diagnostics GmbH, 68305 Mannheim (DE)
(72) Inventor: Egli, Roman, 8008, Zuerich (CH); Furlan, Alan, 6405, Immensee (CH); Curcio, Mario, 5643, Sins (CH)

(57) **Abstract**

The present invention refers to a system for the optical detection of light from analytical samples, the system comprising an analytical instrument comprising an optical detection unit and a sample block unit for receiving a plurality of chemical or biological samples, the system further comprising a calibration device for testing and/or calibrating the optical detection unit of the analytical instrument, wherein the calibration device comprises a substrate and at least one electrically powered reference light source coupled to the substrate, said at least one reference light source emitting light being detected by the optical detection unit.

## Description

### Field of the invention

The present invention relates to a system comprising an analytical instrument for the optical detection of an array of chemical or biological samples and a reference light source calibration device for calibrating the optical detection unit of the instrument.

The present invention also relates to a method for testing and/or calibrating optical detection units of analytical instruments.

### Background

The present invention refers to a category of analytical instruments comprising an optical detection unit, typically used in the diagnostic field for imaging over a relatively large field of view an array of chemical or biological samples. Thermocyclers for quantitative PCR and multiwell plate readers are examples of instruments in this category. Such optical detection units comprise a detector with multiple sensitive elements.

The light concerned is typically fluorescence emitted from the samples when excited with light of a certain wavelength coming from a light source typically comprised within the instrument.

Normally, the optical detection units of analytical instruments need to be calibrated in order to remove artifacts from two-dimensional images caused by variations in the pixel-to-pixel sensitivity of the sensitive elements and/or by distortions of the optical emission path. Typically a standard calibration procedure called flat-field correction is carried out. Flat fielding refers to the process of compensating for different gains and dark currents in a detector, which result in different signal heights received from the sensitive elements of the detector even if the corresponding image regions have the same color and light intensity. Once a detector has been appropriately flat-fielded, a uniform signal will create a uniform output, hence a flat field. This means that any further signal is due to the phenomenon being detected and not to a systematic error of the optical detection unit. This is especially important when imaging is used for quantitation purposes.

Typically, standard chemical solutions are used for this purpose. With known concentrations of fluorophores, e.g. fluorescein solutions, it is also possible to characterize the detector linearity and dynamic range.

Chemical standards present however several disadvantages. First of all they are dependent on the excitation light, thus any error or distortion in the optical excitation path matters. Also, lamp noise from power fluctuations as well as aging can be an issue. In order to serve as a reference for calibrating the optical detection unit, the reference solutions must be reproduced exactly and dispensed with accuracy. This is not just very difficult to achieve but also expensive and time consuming. Moreover, most chemical standards show photobleaching with use, while shelf-life and storage conditions are also major issues.

Solid reference materials are also known in the art. Starna Scientific, United Kingdom, for examples provides a Fluorescent Reference Materials Set, which consists of six polymer blocks containing fluorescent compounds. The emission range is however limited and dependency on the excitation light is still a problem. Also, care should be used for handling, e.g. using gloves. Exposure to solvents should be avoided. Particular attention should be paid and instructions carefully followed for cleaning and storing, meaning that shelf-life and storage conditions are still major issues. It is an object of the present invention to overcome the problems encountered in the prior art when calibrating or testing the optical detection unit of an instrument for the optical detection of an array of chemical or biological samples.

This is achieved by a system comprising a calibration device with at least one electrically powered reference light source providing homogeneous and stable conditions of illumination over an area at least partially covering the field of view of the detector.

A further advantage of the present invention is that the calibration device can be manufactured thin, thus enabling easy insertion and fitting into a typically narrow space between sample holder or block and optical detection unit of the instrument.

In addition, the present invention opens up the possibility to use the calibration device as an internal reference light source during sample detection.

### Description of the invention

The present invention refers to a system for the optical detection of light from analytical samples, the system comprising
a) an analytical instrument comprising
   - an optical detection unit,
   - a sample block unit for receiving a plurality of chemical or biological samples,
b)a calibration device for testing and/or calibrating the optical detection unit of the analytical instrument, wherein the calibration device comprises a substrate and at least one electrically powered reference light source coupled to the substrate, said at least one reference light source emitting light being detected by the optical detection unit.

The present invention also refers to a method for testing and/or calibrating optical detection units of analytical instruments, comprising the steps of
a) providing an analytical instrument comprising
   - an optical detection unit,
   - a sample block unit for receiving an array of chemical or biological samples,
b)providing a calibration device comprising a substrate and at least one electrically powered reference light source coupled to the substrate, said at least one reference light source emitting light being detected by the optical detection unit,
c)testing and/or calibrating the optical detection unit of the analytical instrument, according to the light detected.

The present invention also refers to a method for the optical analysis of an array of chemical or biological samples, comprising the steps of
a) providing an analytical instrument comprising
   - an optical detection unit,
   - a sample block unit for receiving an array of chemical or biological samples,
b) providing a calibration device comprising a substrate and at least one electrically powered reference light source coupled to the substrate, said at least one reference light source emitting light being detected by the optical detection unit,
c) testing and/or calibrating the optical detection unit of the analytical instrument according to the light detected,
d) providing an array of chemical or biological samples,
e) detecting light emitted from the samples with the calibrated optical detection union.

The present invention also refers to a method for the optical analysis of an array of chemical or biological samples, comprising the steps of
a) providing an analytical instrument comprising
   - an optical detection unit,
   - a sample block unit for receiving an array of chemical or biological samples,
b) providing an array of chemical or biological samples,
c) providing a calibration device comprising a substrate and at least one electrically powered reference light source coupled to the substrate, said at least one reference light source emitting light being detected by the optical detection unit,
d) detecting light emitted from the samples and from the calibration device,
e) obtaining a corrected image of the light detected from the samples according to the reference light detected from the calibration device.

An analytical instrument according to the present invention is an apparatus assisting users with the detection, e.g. qualitative and/or quantitative analysis of a plurality, preferably an array, of chemical or biological samples or assisting them with the monitoring of chemical or biological reactions. An example of such an instrument is a multiwell-plate reader.

According to a preferred embodiment, the analytical samples are provided within standard multiwell plates, e.g. in the 96- or 384-well format, or tubes.

An analytical instrument according to the present invention comprises at least an optical detection unit and a sample block unit for receiving an array of chemical or biological samples, e.g. a multiwell-plate.

The instrument may further comprise a loading unit for loading/unloading micro-well plates or tube arrays. The loading unit may comprise a drawer and retainer for multiwell plates, motors for movement of the plates. The instrument may further comprise sensors, e.g. a barcode reader, to identify the type of plate and/or to identify the samples.

The optical detection unit preferably comprises one or more excitation light sources, e.g. a xenon lamp, an LED, a laser, and a detector. The optical detection unit may further comprise optics, as e.g. mirrors, lenses, optical filters, fiber optics, for guiding and filtering the light, one or more reference channels.

According to the present invention, a detector is an imaging device comprising an optical sensor, the optical sensor comprising multiple light sensitive elements, e.g. an array of photoelectric sensors. An example of detector is a camera with a CCD or CMOS sensor.

According to a preferred embodiment the sample block unit is a thermal block unit for thermal treatment of samples, comprising a sample block for multiple sample vials, preferably so conceived that heat exchange can be facilitated. According to a preferred embodiment, the sample block is a multiwell-plate holder or a tube holder and is made of a material with high thermal conductivity for rapid temperature changes, preferably metal, e.g. aluminum or silver.

Thermal treatment of samples concerns processes by which relatively small volumes, preferably less than 1 mL, of chemical or biological samples are exposed to constant temperatures or temperature profiles. This includes for example freezing, thawing, melting of samples; keeping samples at an optimal temperature for a chemical or biological reaction or an assay to occur; subjecting samples to a temperature gradient, e.g. for detecting a characteristic of a sample like the melting point, or the presence of a certain DNA sequence; or subjecting samples to different temperatures varying with time, such as temperature profiles, including temperature cycles, like for example during PCR.

According to a preferred embodiment the sample block unit further comprises temperature sensors and temperature regulating units in close thermal contact with the sample block. Preferably, the temperature regulating units comprise one or more Peltier elements and one or more heat sinks.

According to a preferred embodiment, the thermal block unit is a thermal block cycler, which means a thermal block unit capable of cycling samples through a range of temperatures or temperature profile, e.g. as required for PCR, and the analytical instrument is a thermocycler.

According to a preferred embodiment the method is therefore directed to test and/or calibrate the optical detection unit of an analytical instrument for thermal treatment of chemical or biological samples.

According to another preferred embodiment the method is directed to the optical analysis of nucleic acids.

A calibration device according to the present invention is a tool designed for testing and/or calibrating the optical detection path of the analytical instrument, that is of the light path from the samples to the detector in order to remove artifacts from two-dimensional images caused by variations in the pixel-to-pixel sensitivity and/or by distortions in the optical path. Calibration means primarily flat-fielding of the optical detection unit. Flat fielding refers to the process of compensating for different gains and dark currents in the optical sensor. Once the detector has been appropriately flat-fielded, a uniform signal will create a uniform output, hence a flat field. This means that a homogeneous emission of light from samples generates a homogeneous image or signal, and variations between sensitive elements are due to differences in emission of light from samples.

According to a preferred embodiment the calibration device comprises a substrate. The substrate can be rigid or flexible, and is preferably made of polymer, e.g. plastic material such as polypropylene, polyimide, PET, or glass, or composite of materials such as e.g. a printed circuit board. Preferably, the substrate is manufactured as a thin foil, plate or block. According to a preferred embodiment the substrate has the footprint of a multiwell plate. This means that at least width and length are those typical of a standard multiwell plate while the height can be different. However, any shape with a surface area at least partially covering the field of view of the detector can be suitable.

Preferably, the substrate comprises alignment means such as e.g. holes, pins, protrusions for positioning the calibration device with a certain precision at a desired location, e.g. on the sample block of the instrument, e.g. at the place of a multiwell plate.

When the calibration device is used during sample detection, the calibration device is preferably positioned on top of the sample holder such as e.g. a multiwell plate and the substrate may present holes, e.g. in correspondence of the samples to be detected underneath.
According to one embodiment the substrate is transparent.

The calibration device comprises at least one electrically powered reference light source coupled to the substrate. According to the present invention, an electrically powered reference light source is a light source of known emission transforming electrical current into light. The emission wavelengths or spectra and respective light intensity are preferably chosen similar to or in the range of that of the light emitted from samples during sample detection.

Preferably, the at least one reference light source is located on the surface of the substrate facing the optical detection unit.

According to a preferred embodiment, one reference light source covers most of the substrate surface, that is more than 50% of the substrate surface.

According to another embodiment a discrete number of reference light sources covers discrete areas of the substrate surface.

Preferably, the at least one reference light source is arranged substantially flat on the substrate surface. Preferably, said at least one reference light source is an electroluminescent light source, e.g. an LED. According to a preferred embodiment the at least one reference light source is an organic light emitting diode (OLED).

An OLED is a light-emitting diode (LED) with an emissive electroluminescent layer composed of a film of organic compounds. There are two main categories of OLEDs. One employs small molecules such as organo-metallic chelates and conjugated dendrimers deposited on a carrier typically by vacuum deposition. Another category employs electroluminescent conductive polymers emitting light when connected to a power supply. The latter category concerns the so called polymer light-emitting diodes (PLED) or light-emitting polymers (LEP). OLEDs are known in the field of telecommunications. They can be used for example to produce television screens, computer displays, portable system screens, advertising, information and indication. OLEDs can also be used in light sources for general space illumination, and large-area light-emitting elements. Typical polymers used in PLED displays include derivatives of poly(p-phenylene vinylene) and poly(fluorene). Substitution of side chains onto the polymer backbone may determine the color of the emitted light or the stability and solubility of the polymer for performance and ease of processing. The emissive materials can be applied on the substrate starting from a solution. Different techniques can be applied, for example spincoating, dipcoating, spraying, inkjet printing, screen printing, flexo/gravure printing. These features of OLEDs allow for example to easily customize the design and functionality of the calibration device according to the present invention, e.g. in terms of number, size, shape and color of the light sources, and to use virtually any material for the substrate.

Some of the other key advantages of OLEDs are the possibility to achieve wide viewing angles, to be thin & light, to be compatible with flexible carriers, to require little power. Wide emission angles reduce for example the importance of accurate alignment and positioning of the calibration device, so that for example a small inclination or unevenness of the substrate can be tolerated.
According to a preferred embodiment, the at least one reference light source has a thickness which is less than 1 mm, and OLEDs, with a thickness typically below 200 nm, are very suitable for this purpose.

Preferably, the calibration device comprises one or a few large reference light sources covering most of the field of view of the optical detection unit, that is an area similar to that occupied by an array of samples during sample detection. Alternatively, a number of light sources with an emitting surface which is less than 10 mm² can be used. The number of reference light sources carried by the calibration device may be for example as high as the number of samples which can be contained in a multiwell plate, with similarly arrayed structure. For example, the lateral position of the light sources in a calibration device may mimic that of an array of samples in a multiwell plate.

According to one embodiment, e.g. in case the calibration device is used during sample detection, one or a few reference light sources cover all or most of the surface of the substrate except areas in correspondence of the samples to be detected underneath.

According to a preferred embodiment the at least one reference light source has a radiated power density comprised between 0.1 fW/mm² and 1 nW/mm², preferably between 15 fW/mm² and 100 pW/mm².

According to a preferred embodiment the at least one light source has an emission wavelength comprised within the visible spectrum, preferably between 480 nm and 680 nm, most preferably selected among those used to detect the samples during sample analysis, e.g. about 500 nm, 533 nm, 568 nm, 610 nm, 640 nm, 670 nm.

According to one embodiment of the present invention different calibration devices for different emission wavelengths are provided.
According to another embodiment different reference light sources with different emission wavelengths are present on the same calibration device.
According to one embodiment the intensity of the light emitted by the at least one reference light source can be varied by e.g. varying the electrical power input.
According to another embodiment different calibration devices are provided with different intensity outputs from the at least one reference light source.
Varying the intensity of the emitted light from the light sources mimics different concentrations of fluorophores, by which process it is possible to characterize the detector linearity and dynamic range.

According to one embodiment, the calibration device is employed at least once, e.g. during the last phase of the instrument manufacturing for calibrating the optical detection unit. The calibration may also take place independently from the instrument before the optical detection unit has been assembled into the instrument.

According to another embodiment, the calibration device is used frequently or periodically, e.g. as part of a maintenance program and/or quality assurance, to test whether the optical detection unit is still working properly and eventually to repeat the calibration.
According to another embodiment the calibration device is used during sample detection, wherein one or more reference light sources are preferably located near the position of a sample to be detected. Calibration devices are hence used as they were internal standards for obtaining a corrected image of the light detected from the samples.

More in detail, the present invention is explained in conjunction with the following drawings, representing preferred embodiments, in which:
Figure 1 shows schematically and not to scale a system comprising an instrument and a calibration device.
Figure 2 shows schematically and not to scale one of the possible structures of an OLED coupled to the substrate of the calibration device.
Figures 3a-3c show schematically and not to scale some of the possible embodiments of the calibration device with a varying number of reference light sources.
Figures 4a and 4b show schematically and not to scale other embodiments of the calibration device.

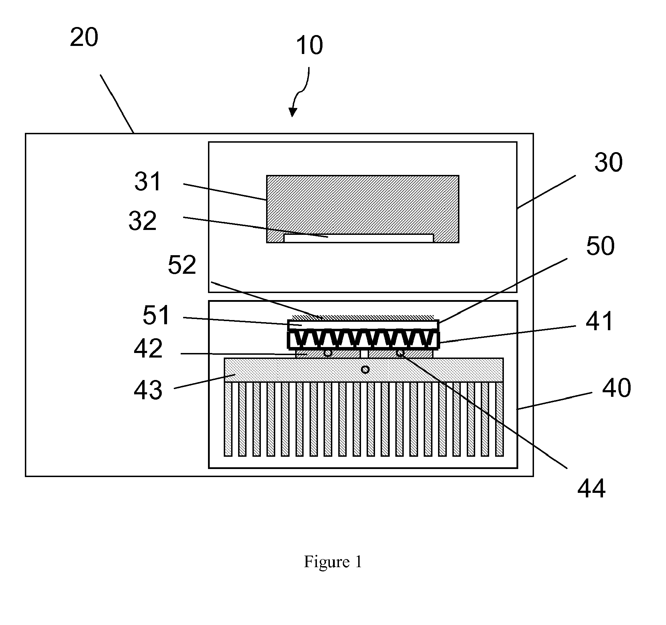

Figure 1 shows a system 10 for the optical detection of light from light sources comprising
a) an instrument 20 comprising
   - an optical detection unit 30,
   - a sample block unit 40 for receiving a plurality of chemical or biological samples,
b)a calibration device 50 for testing and/or calibrating the optical detection unit 30 of the instrument 20,
   wherein the calibration device 50 comprises a substrate 51 and at least one electrically powered reference light source 52 coupled to the substrate 51, said at least one reference light source 52 emitting light being detected by the optical detection unit 30.
The instrument 20 comprises an optical detection unit 30 and a sample block unit 40. The optical detection unit 30 comprises a CCD camera 31 comprising an optical sensor 32.

The sample block unit 40 is a thermal block unit for thermal treatment of samples, comprising a sample block 41 for multiple sample vials. In this case, the sample block 41 is a multi-well-plate holder made of a material with high thermal conductivity for rapid temperature changes, e.g. aluminum or silver.
The sample block unit 40 further comprises temperature regulating units, such as Peltier elements 42 and a heat sink 43, in close thermal contact with the sample block 41, and temperature sensors 44.

The calibration device 50 comprises a substrate 51. The substrate 51 is made of an injection molded plastic material such as polypropylene, polyimide, PET. The substrate 51 has the footprint of a standard multiwell plate so that it can fit onto the sample block unit 40 of the instrument or even on top of a multiwell plate. The substrate 51 further comprises alignment means (not shown) for positioning the calibration device 50 with a certain precision on the sample block 41 at the place of a multiwell plate or on top of a multiwell plate. The calibration device 50 further comprises an organic light emitting diode (OLED) as reference light source 52.

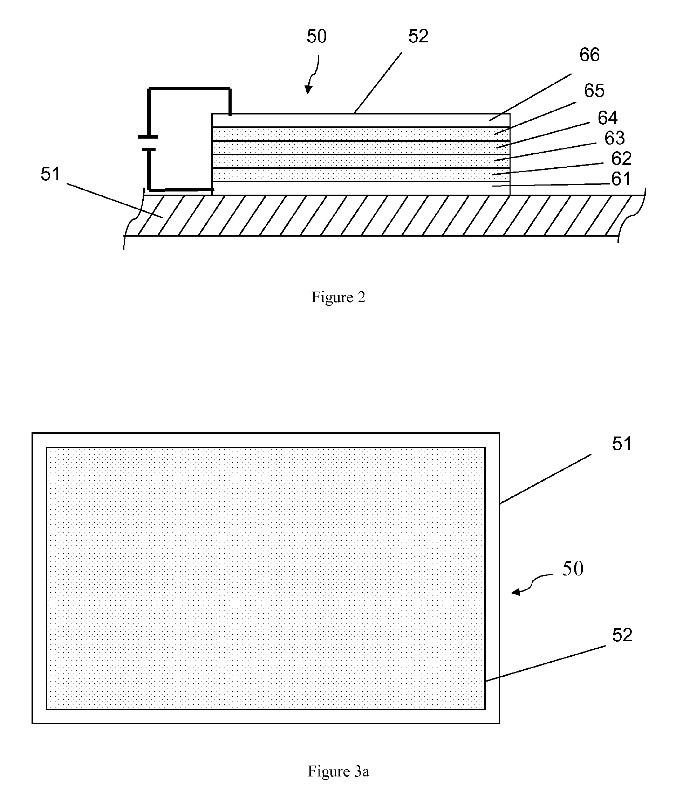

Figure 2 shows the typical multi-layer structure of an OLED 52 coupled to the substrate 51 according to the present invention.

OLED 52 comprises, from bottom to top, the bottom being located at or near the surface of the substrate 51, a reflective electrode (cathode) 61, a so called electron injection layer 62, a so called recombination or emissive layer 63, a so called hole transport or conductive layer 64, a so called hole injection layer 65 and a transparent or semitransparent electrode (anode) 66. The layers are made of organic semiconductors and may comprise small molecules or organic polymers. When a low voltage is applied across the OLED the anode 66 becomes positive with respect to the cathode 61. Thus, the cathode 61 gives electrons to the electron injection layer 62 and from here to the emissive layer 63 where electrons combine with electron holes provided by the anode 66 via the hole transport or conductive layer 64 through the hole injection layer 65.

What happens is that the emissive layer 63 becomes negatively charged, while the conductive layer 64 becomes rich in positively charged holes. Electrostatic forces bring the electrons and the holes towards each other and recombine. This happens close to the emissive layer 63, because in organic semiconductors holes are more mobile than electrons (unlike in inorganic semiconductors). The recombination causes a drop in the energy levels of electrons, accompanied by an emission of radiation whose frequency is in the visible region.

A different number of layers and/or additional layers may be however present. The thickness of all these layers combined is typically below 200 nm. Also a cover layer made e.g. of a transparent insulating material (not shown) may be comprised. A filter layer (not shown) may also be present to reduce the amount of emitted light. The order of the layers may be reversed if the substrate 51 is e.g. made of a thin transparent material, in which case the calibration device 50 would be disposed upside down.

Figure 3a shows an embodiment where one OLED reference light source 52 covers most, i.e. more than 50%, or all the surface of the substrate 51. This embodiment has the advantage of providing a more homogeneous emission over a single large area, covering most of the field of view of the optical detection unit, or an area similar to that occupied by an array of samples during sample detection.

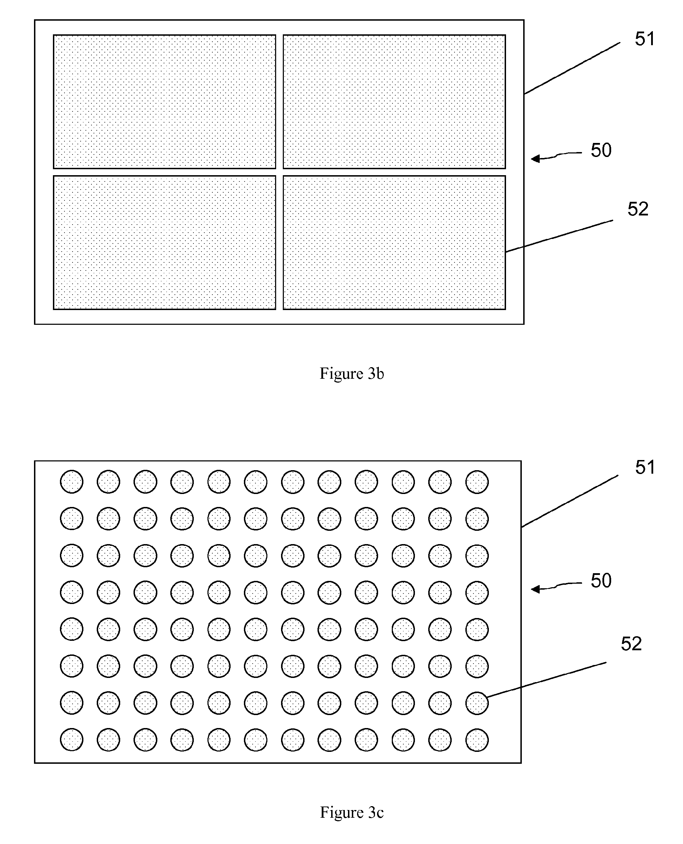

According to other embodiments, shown in figures 3b and 3c, a discrete number of reference light sources 52 covers discrete areas of the surface of the substrate 51. According to one embodiment, the number of reference light sources 52 matches the number and lateral position of samples in a multiwell plate. In this case an emitting surface for each reference light source 52 is preferred which is less than 10 mm², e.g. in the range of 4-6 mm². By employing the OLED technology, several light sources 52 can be deposited or printed on the same substrate 51 during the same process. In this way, homogeneity of emission from light source to light source can be increased in comparison with other conventional light sources which are individually assembled. The reduced cost of production is a further advantage.

The present invention also refers to a method for testing and/or calibrating optical detection units 30 of instruments 20, comprising the steps of
a) providing an instrument 20 comprising
   - an optical detection unit 30,
   - a sample block unit 40 for receiving an array of chemical or biological samples,
b)providing a calibration device 50 comprising a substrate 51 and at least one electrically powered reference light source 52 coupled to the substrate 51, said at least one reference light source 52 emitting light being detected by the optical detection unit 30,
c)testing and/or calibrating the optical detection unit 30 of the instrument 20, according to the light detected.

The present invention also refers to a method for the optical detection of an array of chemical or biological samples, comprising the steps of
a) providing an instrument 20 comprising
   - an optical detection unit 30,
   - a sample block unit 40 for receiving an array of chemical or biological samples,
b) providing a calibration device 50 comprising a substrate 51 and at least one electrically powered reference light source 52 coupled to the substrate 51, said at least one reference light source 52 emitting light being detected by the optical detection unit 30,
c) testing and/or calibrating the optical detection unit of the instrument 20 according to the light detected,
d) providing an array of chemical or biological samples,
e) detecting light emitted from the samples with the calibrated optical detection union 30.

According to one embodiment, the calibration device 50 is employed at least once, e.g. during the last phase of the manufacturing of the instrument 20 for calibrating the optical detection unit 30.

According to another embodiment, the calibration device 50 is used frequently or periodically, e.g. as part of a maintenance program and/or quality assurance, to test whether the optical detection unit 30 is still working properly and eventually to repeat the calibration before a new array of samples is being detected.

The calibration device 50 is disposed during the calibration step on top of the sample block 41 at a position similar to that occupied by a multiwell plate during sample detection. Depending on the effective dimension of the calibration device 50, the relative distance from the optical detection unit 30 may be optionally varied, e.g. to mimic the distance between samples and optical detection unit 30 during sample detection.

According to another embodiment, the calibration device 50 is used routinely, as a standard reference providing compensation factors e.g. for every sample analysis or e.g. for repeating the calibration every time the instrument 20 is turned on.

The present invention also refers to a method for the optical detection of an array of chemical or biological samples, comprising the steps of
b) providing an instrument 20 comprising
   - an optical detection unit 30,
   - a sample block unit 40 for receiving an array of chemical or biological samples,
a) providing an array of chemical or biological samples,
b) providing a calibration device 50 comprising a substrate 51 and at least one electrically powered reference light source 52 coupled to the substrate 51, said at least one reference light source 52 emitting light being detected by the optical detection unit 30,
c) detecting light emitted from the samples and from the calibration device 50,
d) obtaining a corrected image of the light detected from the samples according to the reference light detected from the calibration device 50.

According to another embodiment, thus the calibration device 50 is used during sample detection. The instrument 20 is preferably a multiwell plate reader. The calibration device 50 is preferably disposed on top of the multiwell plate. In this case, one or more reference light sources 52, preferably located near a sample to be detected are used as they were internal standards for obtaining a corrected image of the light detected from the samples.

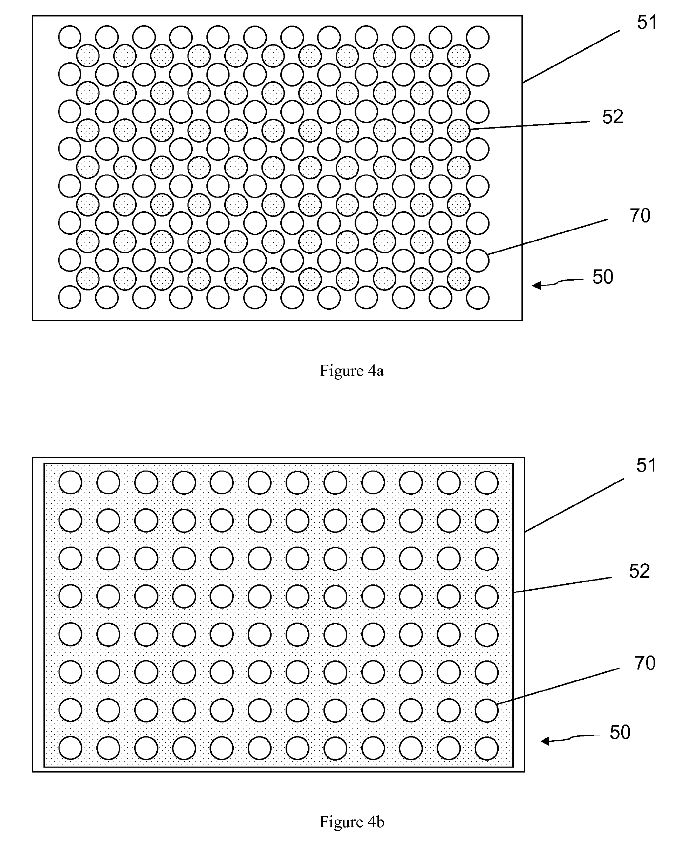

According to one embodiment, the substrate 51 presents holes 70 e.g. in correspondence of the samples to be detected in case the calibration device is disposed on top of the sample array. Figures 4a shows one of the possible embodiments wherein a plurality of reference light sources 52 are e.g. interspaced between holes 70 in the substrate 51. Figure 4b shows another embodiment wherein e.g. one large reference light source 52 covers most of the surface of the substrate 51 and presents holes in correspondence of the holes 70 in the substrate 51. Preferably, at least when the calibration device 50 is used during sample detection, the substrate 51 is transparent and without holes 70.

## Claims

1. System for the optical detection of light from analytical samples comprising
a) an analytical instrument (20) comprising
- an optical detection unit (30),
- a sample block unit (40) for receiving a plurality of chemical or biological samples,
b)a calibration device (50) for testing and/or calibrating the optical detection unit (30) of the analytical instrument (20),
wherein the calibration device (50) comprises a substrate (51) and at least one electrically powered reference light source (52) coupled to the substrate (51), said at least one reference light source (52) emitting light being detected by the optical detection unit (30).

2. The system according to claim 1 wherein the optical detection unit comprises an imaging device comprising an optical sensor, the optical sensor comprising multiple light sensitive elements.

3. The system according to claim 1 or 2 wherein the substrate is made of a material chosen from the group of polymers, glass, metal or composite material, shaped as a foil, plate or block having the footprint of a standard multiwell plate.

4. The system according to any of the claims 1 to 3 wherein one reference light source covers more than 50% of the substrate surface.

5. The system according to any of the claims 1 to 3 wherein an array of reference light sources covers discrete areas of the substrate surface.

6. The system according to any of the preceding claims wherein the at least one reference light source is arranged substantially flat on the substrate surface.

7. The system according to any of the preceding claims wherein the at least one reference light source is an electroluminescent light source.

8. The system of claim 7 wherein the at least one reference light source is an organic light-emitting diode (OLED).

9. Method for testing and/or calibrating optical detection units of analytical instruments (20),
comprising the steps of
a) providing an analytical instrument (20) comprising
- an optical detection unit (30),
- a sample block unit (40) for receiving an array of chemical or biological samples,
b) providing a calibration device (50) comprising a substrate (51) and at least one electrically powered reference light source (52) coupled to the substrate (51), said at least one reference light source (52) emitting light being detected by the optical detection unit (30),
c) testing and/or calibrating the optical detection unit (30) of the analytical instrument (20), according to the light detected.

10. Method for the optical analysis of an array of chemical or biological samples,
comprising the steps of
a) providing an analytical instrument (20) comprising
- an optical detection unit (30),
- a sample block unit (40) for receiving an array of chemical or biological samples,
b) providing a calibration device (50) comprising a substrate (51) and at least one electrically powered reference light source (52) coupled to the substrate (51), said at least one reference light source (52) emitting light being detected by the optical detection unit (30),
c) testing and/or calibrating the optical detection unit (30) of the analytical instrument (20) according to the light detected,
d) providing an array of chemical or biological samples,
e) detecting light emitted from the samples with the calibrated optical detection union (30).

11. Method for the optical analysis of an array of chemical or biological samples,
comprising the steps of
a) providing an analytical instrument (20) comprising
- an optical detection unit (30),
- a sample block unit (40) for receiving an array of chemical or biological samples,
b) providing an array of chemical or biological samples,
c) providing a calibration device (50) comprising a substrate (51) and at least one electrically powered reference light source (52) coupled to the substrate (51), said at least one reference light source (52) emitting light being detected by the optical detection unit (30),
d) detecting light emitted from the samples and from the calibration device (50),
e) obtaining a corrected image of the light detected from the samples according to the reference light detected from the calibration device (50).

12. The method according to any of the claims 9 to 11 wherein the optical detection unit comprises an imaging device comprising an optical sensor, the optical sensor comprising multiple light sensitive elements.

13. The method according to any of the claims 9 to 12 wherein the substrate is made of a material chosen from the group of polymers, glass, metal or composite material, shaped as a foil, plate or block having the footprint of a standard multiwell plate.

14. The method according to any of the claims 9 to 13 wherein the at least one reference light source is an electroluminescent light source.

15. The method of claim 14 wherein the at least one reference light source is an organic light-emitting diode (OLED).
